# EUROPEAN PATENT APPLICATION

(11) **EP 3 907 392 A1**
(43) Date of publication of application: **10.11.2021**
(21) Application number: 21175715.8
(22) Date of filing: 09.01.2013
(51) Int. Cl.: F02C 7/06, F01D 25/16

(54) **GAS TURBINE ENGINE AFT BEARING ARRANGEMENT**

(30) Priority: 31.01.2012 US 201261593050 P; 02.02.2012 US 201213364502
(62) Divisional of application: 13767684.7
(71) Applicant: Raytheon Technologies Corporation, Farmington, CT 06032 (US)
(72) Inventor: SAVELA, Gregory M., Amston, 06231 (US)
(74) Representative: Dehns

(57) **Abstract**

An example gas turbine engine (20) includes a turbine (46, 54) and first and second spools (30, 32) coaxial with one another. The first spool (30) is arranged within the second spool (32) and extends between forward and aft ends. The aft end extends axially beyond the second spool (32) and supports the turbine (46, 54). A housing (58D) is arranged downstream from the turbine (46, 54). First and second bearings (38D, 38E) are mounted to the aft end of the first spool (30) and supported by the housing portion (58D).

## Description

This application claims priority to United States Application No. 13/364,502, filed on February 2, 2012, which claims priority to United States Provisional Application No. 61/593,050, filed on January 31, 2012.

### BACKGROUND

This disclosure relates to a bearing arrangement for a gas turbine engine.

A typical jet engine has two or three spools, or shafts, that transmit torque between the turbine and compressor sections of the engine. Each of these spools is typically supported by two bearings. One bearing, for example, a ball bearing, is arranged at a forward end of the spool and is configured to react to both axial and radial loads. Another bearing, for example, a roller bearing or journal bearing is arranged at the aft end of the spool and is configured to react only to radial loads. This bearing arrangement fully constrains the shaft except for rotation, and axial movement of one free end is permitted to accommodate engine axial growth.

### SUMMARY

An example gas turbine engine includes a turbine and first and second spools coaxial with one another. The first spool is arranged within the second spool and extends between forward and aft ends. The aft end extends axially beyond the second spool and supports the turbine. A housing is arranged downstream from the turbine. First and second bearings are mounted to the aft end of the first spool and supported by the housing portion.

In a further embodiment of any of the above, a combustor is included, as well as high and low pressure turbines arranged downstream from the combustor. The high pressure turbine is mounted on the second spool. The low pressure turbine is mounted on the first spool and corresponds to the turbine.

In a further embodiment of any of the above, the housing portion corresponds to a turbine exhaust case and includes a bearing hub removably secured to an annular flange. The first and second bearings are mounted on the bearing hub.

In a further embodiment of any of the above, a bearing compartment is includes, and first and second bearings are arranged in the bearing compartment aft of the second spool.

In a further embodiment of any of the above, the low pressure turbine includes multiple turbine rotors. The first bearing is arranged axially forward of an aft side of a last rotor stage of the low pressure turbine.

In a further embodiment of any of the above, the bearing hub includes first and second hub walls respectively supporting the first and second bearings. The first and second hub walls are inclined radially outward to the first and second bearings from an annular apex at which the first and second hub walls are joined near the annular flange. A portion of the first hub wall is arranged radially beneath the low pressure turbine.

In a further embodiment of any of the above, the first and second bearings are spaced apart from one another approximately 4-12 inches (10-30 cm). The first hub wall is oriented at a first angle of between 30° and 60°.

In a further embodiment of any of the above, the second hub wall is oriented at a second angle of between 30° and 60°.

In a further embodiment of any of the above, the annular flange is oriented relative to the first hub wall at a third angle of between 0° and 30°.

In a further embodiment of any of the above, the first angle is about 45° and the third angle is about 0°.

In a further embodiment of any of the above, the multiple turbine rotors include first, second and third turbine rotors. The third turbine rotor corresponds to the last rotor stage. The first turbine rotor corresponds to a forward-most rotor stage, and the second turbine rotor is arranged axially between the first and second rotors. A low pressure turbine hub is included and is mounted on the first spool and secured to the second turbine hub for supporting the multiple turbine rotors.

A bearing hub for a gas turbine engine includes first and second hub walls integrally formed with one another to provide a unitary structure. The first and second hub walls are inclined radially outward from an annular apex; and first and second bearings respectively supported by the first and second walls opposite the apex.

In a further embodiment of any of the above, the first and second bearings are roller bearings.

In a further embodiment of any of the above, the first and second hub walls each are respectively oriented at first and second angles each of between 30° and 60° relative to an axis of the bearing hub.

In a further embodiment of any of the above, the first and second angles are each about 45°.

In another embodiment, a gas turbine engine includes a fan and a compressor section fluidly connected to the fan. The compressor includes a high pressure compressor and a low pressure compressor. A combustor is fluidly connected to the compressor section, and a turbine section is fluidly connected to the combustor. The turbine section includes a high pressure turbine coupled to the high pressure compressor via a shaft, and a low pressure turbine. First and second hub walls are integrally formed with one another to provide a unitary structure. The first and second hub walls are inclined radially outward from an annular apex at which the first and second hub walls are joined. A turbine exhaust case is arranged downstream from the low pressure turbine supporting the annular apex. First and second bearings are respectively supported by the first and second walls opposite the apex.

In a further embodiment of any of the above, the gas turbine engine is a high bypass geared aircraft engine having a bypass ratio of greater than about six (6).

In a further embodiment of any of the above, the gas turbine engine includes a low Fan Pressure Ratio of less than about 1.45.

In a further embodiment of any of the above, the low pressure turbine has a pressure ratio that is greater than about 5.

### BRIEF DESCRIPTION OF THE DRAWINGS

The disclosure can be further understood by reference to the following detailed description when considered in connection with the accompanying drawings.
Figure 1 schematically illustrates an example gas turbine engine.
Figure 2 is another schematic view of the gas turbine engine illustrating an example bearing arrangement.
Figure 3 is a more detailed schematic view of an aft bearing arrangement illustrated in Figure 2.

### DETAILED DESCRIPTION

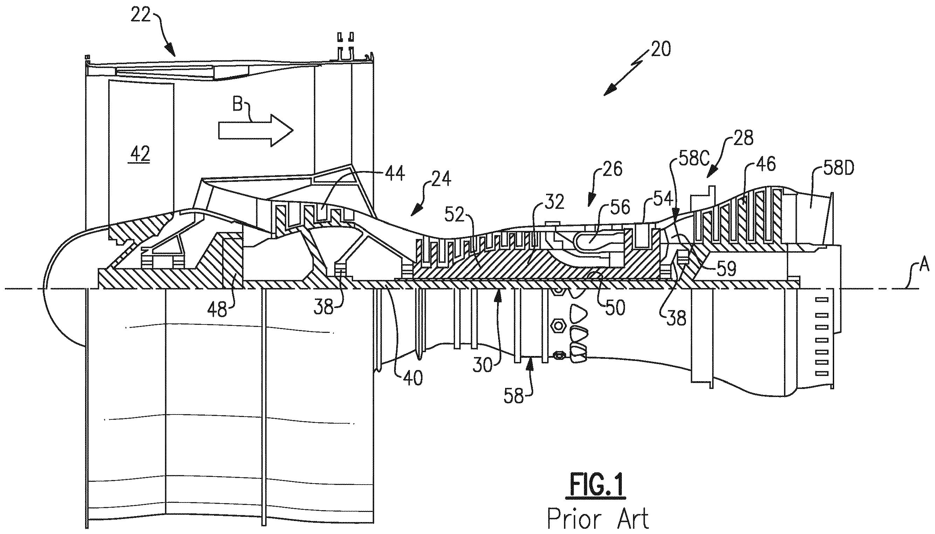

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flowpath while the compressor section 24 drives air along a core flowpath for compression and communication into the combustor section 26 then expansion through the turbine section 28. Although depicted as a turbofan gas turbine engine in the disclosed non-limiting embodiment, it should be understood that the concepts described herein are not limited to use with turbofans as the teachings may be applied to other types of turbine engines including three-spool architectures.

The engine 20 generally includes a low speed spool 30 and a high speed spool 32 mounted for rotation about an engine central longitudinal axis A relative to an engine static structure or housing 58 via several bearing systems 38. It should be understood that various bearing systems 38 at various locations may alternatively or additionally be provided. The housing 58 includes first, second, third, and fourth housing portions 58A, 58B, 58C, 58D. The third and fourth housing portions 58C, 58D respectively correspond to a mid-turbine frame and a turbine exhaust case.

The low speed spool 30 generally includes an inner shaft 40 that interconnects a fan 42, a low pressure compressor 44 and a low pressure turbine 46. The inner shaft 40 is connected to the fan 42 through a geared architecture 48 to drive the fan 42 at a lower speed than the low speed spool 30. The high speed spool 32 includes an outer shaft 50 that interconnects a high pressure compressor 52 and high pressure turbine 54. A combustor 56 is arranged between the high pressure compressor 52 and the high pressure turbine 54. The mid-turbine frame 58C of the engine static structure 58 is arranged generally between the high pressure turbine 54 and the low pressure turbine 46. The mid-turbine frame 58C supports one or more bearing systems 38 in the turbine section 28. The turbine exhaust case 58D is arranged downstream from the low pressure turbine 46 and may support one or more bearing systems as well. The inner shaft 40 and the outer shaft 50 are concentric and rotate via bearing systems 38 about the engine central longitudinal axis A, which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 58C includes airfoils 59 which are in the core airflow path. The turbines 46, 54 rotationally drive the respective low speed spool 30 and high speed spool 32 in response to the expansion.

The engine 20 is, in one example, a high-bypass geared aircraft engine. In a further example, the engine 20 bypass ratio is greater than about six, with an example embodiment being greater than ten, the geared architecture 48 is an epicyclic gear train, such as a planetary gear system or other gear system, with a gear reduction ratio of greater than about 2.3 and the low pressure turbine 46 has a pressure ratio that is greater than about 5. In one disclosed embodiment, the engine 20 bypass ratio is greater than about ten, the fan diameter is significantly larger than that of the low pressure compressor 44, and the low pressure turbine 46 has a pressure ratio that is greater than about 5:1. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.5:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,668 m). The flight condition of 0.8 Mach and 35,000 ft (10,668 m), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^{0.5}, where °R = 9/5 x K. The "Low corrected fan tip speed" as disclosed herein according to one non-limiting embodiment is less than about 1150 ft / second (350.5 m/s).

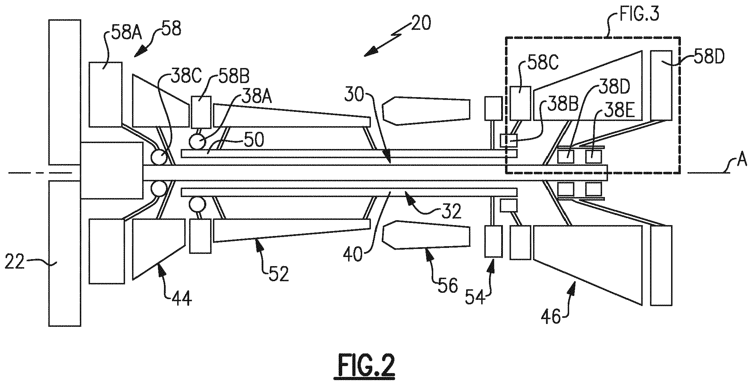

An example bearing arrangement for the gas turbine engine 20 is schematically depicted in Figure 2. The low speed spool 30 extends axially between forward and aft ends, with the aft end extending beyond the high speed spool 32. The high speed spool 32 is supported for rotation by first and second bearings 38A, 38B. In one example, the first bearing 38A is of a type that may react to both axial and radial loads, such as a ball bearing. The second bearing 38B is of a type that reacts to radial loads, such as a roller bearing or a journal bearing. The low speed spool 30 is supported by first, second and third bearings 38C, 38D, 38E. The first bearing 38C is of a type that reacts to both axial and radial loads. The second and third bearings 38D, 38E are of a type that reacts to radial loads. The second and third bearings 38D, 38E support an aft end of the low speed spool 30.

The low speed spool 30 has a higher length/diameter (L/D) ratio than the high speed spool 32. From a rotor dynamics standpoint, a shaft will reach a critical speed of instability at a lower speed as the L/D ratio gets larger. Providing at least two bearings at the aft end of the low speed spool 30 increases the critical speed of the low speed spool 30, which enables higher overall engine speeds and lower weight thereby allowing the engine 20 to be faster and smaller for a given level of thrust.

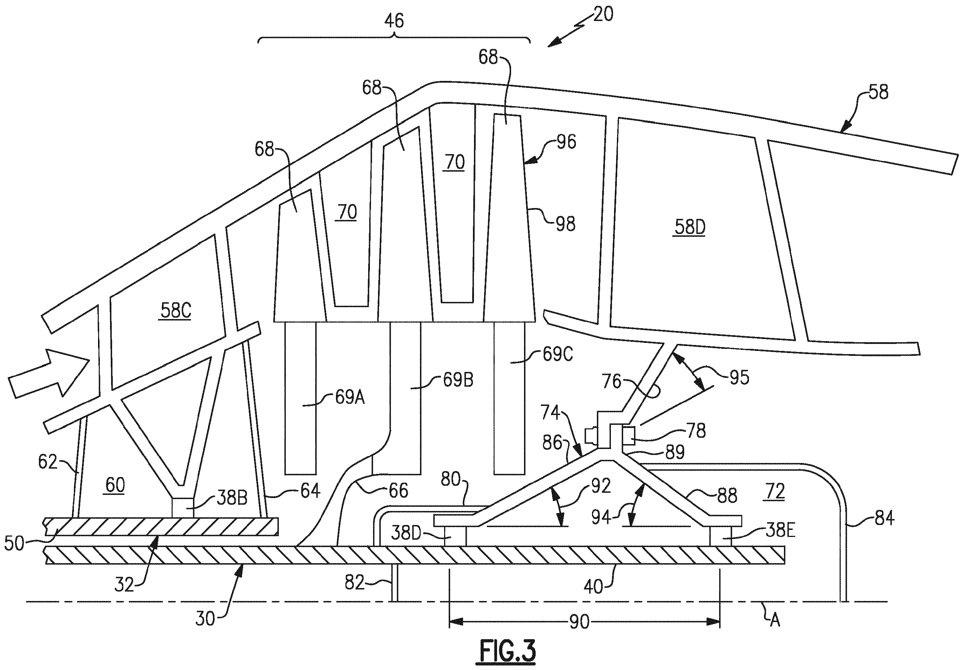

Figure 3 illustrates a more detailed view of the engine 20 shown in Figure 2. The second bearing 38B supporting the low speed spool 30 is arranged within a first bearing compartment 60. The first bearing compartment 60 is provided by first and second walls 62, 64, which are sealed relative to the third housing portion 16C and the second spool 30.

The low pressure turbine 46 includes a low pressure turbine rotor hub 66 secured to the low speed spool 30. The low pressure turbine rotor hub 66 supports multiple low pressure turbine blades 68 in one example. Low pressure turbine stator vanes 70 are provided between the low pressure turbine blades 68 and supported by the housing 16. The low pressure turbine rotor hub 66 is canted in an aft direction, which accommodates a second bearing compartment 72. The second and third bearings 38D, 38E are arranged within the second bearing compartment 72, which is provided by first and second walls 80, 82 and a cover 84, for example. The cover 84 is removably secured over the aft end and encloses the second and third bearings 38D, 38E.

In the example, the turbine exhaust case 58D includes a radially rearward canted annular flange 76, which removably supports a hub 74 secured to the flange 76 by fasteners 78. The hub 74 includes first and second hub walls 86, 88 canted toward one another in opposing directions and adjoining one another at an annular apex 89 provided near the flange 76 in the example shown. In the example shown, the first and second hub walls 86, 88 provide an integrated, unitary structure. Each of the first and second hub walls 86, 88 supports one of the second and third bearings 38D, 38E. The aft-canted low pressure turbine rotor hub 66 accommodates at least the second bearing 38D and a portion of the first hub wall 86 is arranged radially beneath the low pressure turbine 46 such that axial length need not be added to the low speed spool 30. The second bearing 38D is arranged axially forward of an aft side 98 of a last rotor stage 96.

In one example, the second and third bearings 38D, 38E are spaced apart from one another a span 90 that is approximately 4-12 inches (10-30 cm), for example. In one example, the first hub wall 86 is oriented at a first angle 92 of between 30° and 60°, and the second hub wall 88 is oriented at a second angle 94 of between 30° and 60°. The annular flange 76 is oriented relative to the first hub wall 86 at a third angle 95 of between 0° and 30°, for example. In one example, the first angle 92 is about 45° and the third angle 95 is about 0°. The above values are exemplary for one example engine design.

The multiple turbine rotors include first, second and third turbine rotors 69A, 69B, 69C. The third turbine rotor is part of the last rotor stage 96. The first turbine rotor 69A corresponds to a forward-most rotor stage. The second turbine rotor 69B is arranged axially between the first and third rotors 69A, 69C. The low pressure turbine rotor hub 66 is mounted on the low speed spool 30 and is secured to the second turbine hub 69B for supporting the low pressure turbine 46. In one example, the bearing hub 74 includes a moment stiffness of 80,000,000 in-lb/rad (9,144,000 cm-kg/rad), for example, and a lateral stiffness of 5,000,000 lb/in (886,000 kg/cm).

Although example embodiments have been disclosed, a worker of ordinary skill in this art would recognize that certain modifications would come within the scope of the claims. For that reason, the following claims should be studied to determine their true scope and content.

## Claims

1. A bearing hub (74) for a gas turbine engine (20) comprising:
first and second hub walls (86, 88) integrally formed with one another to provide a unitary structure, the first and second hub walls (86, 88) inclined radially outward from an annular apex (89); and
first and second bearings (38D, 38E) respectively supported by the first and second walls (86, 88) opposite the apex (89), wherein the first and second hub walls (86, 88) each are respectively oriented at first and second angles (92, 94) each of between 30° and 60° relative to an axis (A) of the bearing hub (74).

2. The bearing hub according to claim 1, wherein the first and second bearings (38D, 38E) are roller bearings.

3. The bearing hub according to claim 1 or 2, wherein the first and second angles (92, 94) are each about 45°.

4. The bearing hub according to claim 1, 2 or 3, wherein the first and second bearings (38D, 38E) are configured to support an aft end of a low speed spool (30) of a gas turbine engine (20).

5. A gas turbine engine (20) comprising:
a fan (42);
a compressor section (24) fluidly connected to the fan (42), the compressor section (24) comprising a high pressure compressor (52) and a low pressure compressor (44);
a combustor (56) fluidly connected to the compressor section (24);
a turbine section (28) fluidly connected to the combustor (56), the turbine section (28) comprising:
a high pressure turbine (54) coupled to the high pressure compressor (52) via a shaft (50);
a low pressure turbine (46);
the bearing hub (74) of claim 1, 2 or 3, the first and second hub walls (86, 88) joined at the annular apex (89); and
a turbine exhaust case (58D) arranged downstream from the low pressure turbine (46) supporting the annular apex (89).

6. The gas turbine engine according to claim 5, wherein the gas turbine engine (20) includes a low Fan Pressure Ratio of less than about 1.45, and/or the low pressure turbine (46) has a pressure ratio that is greater than about 5.

7. A gas turbine engine (20) comprising:
a turbine (46, 54);
a spool (30, 32) extending between forward and aft ends, the aft end supporting the turbine (46, 54);
a housing portion (58D) arranged downstream from the turbine (46, 54); and
first and second bearings (38D, 38E) mounted to the aft end of the spool (30, 32) and supported by the housing portion (58D),
wherein the housing portion (58D) includes a bearing hub (74) removably secured to an annular flange (76), the first and second bearings (38D, 38E) are mounted to the bearing hub (74), the first and second bearings (38D, 38E) are arranged in a bearing compartment (72), the bearing hub (74) includes first and second hub walls (86, 88) respectively supporting the first and second bearings (38D, 38E), the first and second hub walls (86, 88) are inclined radially to the first and second bearings (38D, 38E) from an annular apex (89) at which the first and second hub walls (86, 88) are joined near the annular flange (76), and a portion of the first hub wall (86) is arranged radially beneath the turbine (46, 54), and
wherein the first hub wall (86) is oriented at a first angle (92) of between 30° and 60° relative to a line parallel to the longitudinal axis (A), the second hub wall (88) is oriented at a second angle (94) of between 30° and 60° relative to a line parallel to the longitudinal axis (A), and the first and second hub walls (86,88) are canted toward one another in opposing directions and provide an integrated, unitary structure.

8. The gas turbine engine according to claim 7, wherein the housing portion (58D) corresponds to a turbine exhaust case (58D).

9. The gas turbine engine according to claim 7 or 8, wherein the spool (30, 32) is one of first and second spools (30, 32) coaxial with one another, the first spool (30) arranged within the second spool (32), and, optionally, the bearing compartment (72) is aft of the second spool (32).

10. The gas turbine engine according to claim 9, comprising a combustor (56), and high and low pressure turbines (46, 54) downstream from the combustor (56), the high pressure turbine (54) mounted on the second spool (32), and the low pressure turbine (46) mounted on the first spool (30) and corresponding to the turbine, and, optionally, the low pressure turbine (46) has a pressure ratio that is greater than five.

11. The gas turbine engine according to claim 10, wherein the low pressure turbine (46) includes multiple turbine rotors (69A, 69B, 69C), and the first bearing (38D) is arranged axially forward of an aft side (98) of a last rotor stage (96) of the low pressure turbine (46).

12. The gas turbine engine according to claim 11, wherein the multiple turbine rotors (69A, 69B, 69C) include first, second and third turbine rotors (69A, 69B, 69C), the third turbine rotor (69C) corresponding to the last rotor stage (96), the first turbine rotor (69A) corresponding to a forward-most rotor stage, and the second turbine rotor (69B) arranged axially between the first and third rotors (69A, 69C), and comprising a low pressure turbine hub (66) mounted on the first spool (30) and secured to the second turbine rotor (69B) for supporting the multiple turbine rotors (69A, 69B, 69C).

13. The gas turbine engine according to any of claims 7 to 12, wherein the first and second bearings (38D, 38E) are spaced apart from one another approximately four to twelve inches (10-30 cm).

14. The gas turbine engine according to any of claims 7 to 13, wherein the annular flange (76) is oriented relative to the first hub wall (86) at a third angle (95) of between 0° and 30°, and, optionally, the first angle (92) is about 45° and the third angle (95) is about 0°.

15. The gas turbine engine according to any of claims 5 to 14, wherein the gas turbine engine (20) is a high bypass geared aircraft engine having a bypass ratio of greater than about six.
